# EUROPÄISCHE PATENTSCHRIFT

(11) **EP 1 525 444 B1**
(45) Veröffentlichungstag und Bekanntmachung des Hinweises auf die Patenterteilung: **14.12.2005**
(21) Anmeldenummer: 03766224.4
(22) Anmeldetag: 18.07.2003
(51) Int. Cl.: G01L 13/02

(54) **DIFFERENZDRUCKSENSOR MIT SYMMETRISCHEM TRENNKÖRPERFEHLER**
DIFFERENTIAL PRESSURE SENSOR COMPRISING A SYMMETRIC ERROR IN THE SEPARATING BODIES
CAPTEUR DE PRESSION DIFFERENTIEL A DEFAUT SYMETRIQUE DE CORPS DE SEPARATION

(30) Priorität: 30.07.2002 DE 10234754
(43) Veröffentlichungstag der Anmeldung: 27.04.2005
(73) Patentinhaber: Endress + Hauser GmbH + Co. KG, 79689 Maulburg (DE)
(72) Erfinder: BURCZYK, Dietfried, 14513 Teltow (DE); DANNHAUER, Wolfgang, 14513 Teltow (DE)
(74) Vertreter: Andres, Angelika Maria
(86) Internationale Anmeldenummer: PCT/EP2003/007842
(87) Internationale Veröffentlichungsnummer: WO 2004/013594

(56) Entgegenhaltungen:
- US-A- 3 895 524
- US-A- 4 782 703
- US-A- 4 787 249
- PATENT ABSTRACTS OF JAPAN vol. 008, no. 153 (P-287), 17. Juli 1984 (1984-07-17) -& JP 59 050328 A (TOKYO SHIBAURA DENKI KK), 23. März 1984 (1984-03-23)
- PATENT ABSTRACTS OF JAPAN vol. 008, no. 159 (P-289), 24. Juli 1984 (1984-07-24) -& JP 59 056139 A (YAMATAKE HONEYWELL KK), 31. März 1984 (1984-03-31)

## Beschreibung

Die vorliegende Erfindung betrifft einen Relativdrucksensor bzw. Differenzdrucksensor, insbesondere mit hydraulischer Druckübertragung. Derartige Drucksensoren mit hydraulischer Druckübertragung umfassen in der Regel ein Meßwerk mit zwei Halbkammem, die jeweils von einer Trennmembran verschlossen sind und mit einem Übertragungsmedium gefüllt sind. Die Trennmembranen werden jeweils mit einem Meßdruck bzw. Referenzdruck beaufschlagt, der über die Trennmembranen in die jeweilige Halbkammer übertragen wird. Die Halbkammem sind voneinander durch einen Elementarsensor getrennt, wobei der Elementarsensor ein druckempfindliches Element, insbesondere eine Meßmembran, aufweist, die auf ihrer ersten Oberfläche mit dem hydraulischen Druck in der ersten Halbzelle und auf ihrer zweiten Oberflächen mit dem hydraulischen Druck in der zweiten Halbzelle beaufschlagt wird.

Das Dokument US 4787249 offenbart einen Relativdrucksensor mit zwei Holbkammern.

Die Trennmembranen weisen eine endliche Steifigkeit auf, so daß der Druck in den Halbzellen jeweils um einen Druck dPₘ von den an der Trennmembran anstehenden Druck abweicht, wobei die Druckabweichung dPₘ von der Auslenkung der Trennmembran abhängt.

Insofern als das Meßelement des Elementarsensors gewöhnlich sehr steif ist, kann die Auslenkung der Trennmembran aufgrund von Schwankungen des externen Drucks in erster Linie vernachlässigt werden. Die wesentlichen Auslenkungen sind durch die thermische Ausdehnung des Übertragungsmediums in den Halbkammem des Meßwerks bedingt.

Aufgrund von konstruktiven Randbedingungen und Fertigungstoleranzen ist es sehr schwierig, bzw. praktisch unmöglich, ein Meßwerk mit perfekt symmetrischen Halbkammem aufzubauen. Das heißt, es verbleiben geringe Abweichungen zwischen den Volumina der beiden Halbkammem, und die Steifigkeit der beiden Trennmembranen ist nicht absolut identisch. Dies hat zur Folge, daß beispielsweise bei einer Erwärmung der Übertragungsflüssigkeit in den beiden Halbkammern das Meßelement von seinen beiden druckernpfindlichen Seiten mit einem unterschiedlichen hydrostatischen Druck beaufschlagt wird, obwohl beispielsweise extern ein identischer Druck auf beide Trennmembranen wirkt. Dies führt zu einer temperaturabhängigen Nullpunktverschiebung des Meßsignals. Der vorliegenden Erfindung liegt daher die Aufgabe zugrunde, einen Differenzdrucksensor bereitzustellen, der die beschriebenen Nachteile überwindet.

Die Aufgabe wird gelöst durch den Differenzdrucksensor gemäß Anspruch 1. Weitere Vorteile und Gesichtspunkte der Erfindung ergeben sich aus den abhängigen Ansprüchen, der Beschreibung und den Zeichnungen.

Der erfindungsgemäße Differenzdrucksensor umfaßt ein Meßwerk mit einer ersten Halbkammer mit einem ersten Volumen V₁, die von einer ersten Membransteifigkeit E₁ verschlossen ist und einer zweiten Halbkammer, mit einem zweiten Volumen V₂, die von einer zweiten Trennmembran mit einer zweiten Membransteifigkeit E₂ verschlossen ist, wobei die erste Halbkammer von der zweiten Halbkammer durch ein druckempfindliches Element, insbesondere einer Meßmembran, getrennt ist und die erste Halbkammer mit einer ersten Übertragungsflüssigkeit mit einem ersten Wärmeausdehnungskoeffizienten α₁ und die zweite Halbkammer mit einer zweiten Übertragungsflüssigkeit mit einem zweiten Wärmeausdehnungskoeffizienten α₂ gefüllt sind, wobei ein erstes Produkt aus der ersten Membransteifigkeit mit dem erste Volumen und dem ersten Wärmeausdehnungskoeffizienten im wesentlichen gleich einem zweiten Produkt aus der zweiten Membransteifigkeit mit dem zweiten Volumen und dem zweiten Wärmeausdehnungskoeffizienten ist (E₁ * V₁ * α₁ = E₂ * V₂ * α₂), wobei ferner mindestens ein Faktor des ersten Produktes konstruktiv von dem entsprechenden Faktor des zweiten Produkts abweicht.

Die absolute Gleichheit zweier Produktes deren jeweilige Faktoren durch technische Größen gegeben sind ist in der technischen Realisierung praktisch nie zu erreichen, wenngleich sie anzustreben ist.

Im wesentlichen gleich soll heißen, daß die Produkte um nicht mehr als 1%, bevorzugt nicht mehr als 0,3% und besonders bevorzugt nicht mehr als 0,1% voneinander abweichen. Die Gleichheit der Produkte bis auf die beschriebenen Abweichungen muß mindestens bei 20°C, bevorzugt zwischen 0°C und 40°C, weiter bevorzugt zwischen -20°C und 60°C und besonders bevorzugt zwischen -40°C und 80°C erfüllt sein.

In einer bevorzugten Ausführungsform weist das Meßwerk zumindest einen abstimmbaren Füllkörper auf, der das Volumen der ersten oder der zweiten Halbkammer soweit verändert, daß die zuvor definierten Produkte erfindungsgemäß identisch sind. Optional weisen beide Halbkammem jeweils einen abstimmbaren Füllkörper auf.

Anstelle des beschriebenen abstimmbaren Füllkörpers bzw. der abstimmbaren Füllkörper, die beispielsweise als Stempel, Schrauben oder Kolben realisiert sind, die das Volumen der Halbkammem kontinuierlich verändern können, sind gleichermaßen Lösungen denkbar, bei denen mehrere Füllkörper in eine entsprechende Aufnahme eingesetzt werden, die jeweils mit einer Halbkammer kommuniziert. Diese Füllkörper können beispielsweise Zylinder oder Scheiben sein, die in ausreichender Menge in eine entsprechende Bohrung eingelegt werden, bis das Volumen der jeweiligen Halbkammer auf den gewünschten Wert angepaßt ist. Zur Sicherung der Füllkörper kann beispielsweise auch eine Druckfeder dienen, die selbst ein Füllkörper ist und zwischen den Zylindern bzw. Scheiben und einem Verschluß, der jeweils eine Halbkammer druckdicht abschließt, axial eingespannt ist.

Im Normalfall wird in beiden Halbkammern das gleiche hydraulische Übertragungsmedium zum Einsatz kommen, so daß der erste Wärmeausdehnungskoeffizient α₁ gleich dem zweiten Wärmeausdehungskoeffizient α₂ ist.

Im allgemeinen ist es jedoch auch möglich, den Wärmeausdehnungskoeffizienten mindestens einer Übertragungsflüssigkeit so anzupassen, daß die erfindungsgemäße gewünschte Identität der Produkte erzielt wird. Bei einer Mischung von beispielsweise einem Silikonöl und einem Mineralöl ist der Wärmeausdehnungskoeffizient eine Funktion der jeweiligen Ölanteile. Somit kann der gewünschte Wärmeausdehnungskoeffizient durch eine entsprechende Mischung der Öle eingestellt werden. Gleichermaßen läßt sich der Wärmeausdehnungskoeffizient durch Mischung von Silikonölen verschiedener Molekulargewichte einstellen. Diese Alternative ist insbesondere dann zu wählen, wenn die konstruktive Freiheit bei anderen Parametern eingeschränkt ist, d.h. wenn das Volumen nur in engen Grenzen variiert werden kann, und die Volumina der ersten Halbkammer und der zweiten Halbkammer in einem solchen Maße voneinander abweichen, daß dies nicht in sinnvoller Weise durch eine angepaßte Membransteifigkeit kompensiert werden kann.

Selbstverständlich ist jedoch auch die Steifigkeit der Trennmembranen ein Parameter, der bei gegebenem Membrandurchmesser und gegebenem Membranmaterial sowohl über die Membranstärke als auch über das Ausmaß der Korrugation einstellbar ist.

Zur Umsetzung der vorliegenden Erfindung kann daher unter konstruktiven Randbedingungen, die unterschiedliche Volumina in der ersten und der zweiten Halbkammer zwingend erforderlich machen, eine erste konstruktive Angleichung durch Einstellung der Membransteifigkeit erfolgen. In einer bevorzugten Ausführungsform ist das Produkt der ersten Membransteifigkeit mit dem ersten Volumen gleich dem Produkt der zweiten Membransteifigkeit mit dem zweiten Volumen. Wenn eine Gleichheit der genannten Produkte hier auch nicht zu erzielen ist, kann eine weitere Angleichung noch durch die Auswahl von Übertragungsmedien mit einem geeigneten Wärmeausdehnungskoeffizienten erfolgen. Während die beschriebene Abstimmung konstruktiver Natur ist und gewöhnlich eine gesamte Fertigungsserie von Drucksensoren betreffen wird, so kann abschließend noch eine Feinabstimmung der Halbkammervolumina in beschriebener Weise durch Füllkörper erfolgen, um individuelle thermische Nullpunktschwankungen aufgrund von Fertigungstoleranzen auszugleichen.

Die Erfindung wird nun anhand der in den Figuren dargestellten Ausführungsformen beschrieben.

Es zeigt:
- Fig. 1:: Einen Querschnitt durch einen Differenzdrucksensor mit einer hydrostatisch eingespannten Meßzelle;
- Fig. 2:: einen Relativdrucksensor mit einem asymmetrischen Aufbau;
- Fig. 3a:: eine Detailansicht einer ersten Ausführungsform einer Vorrichtung zur Kontrolle des Volumens einer Halbkammer, und
- Fig. 3b:: eine Detailansicht einer zweiten Ausführungsform einer Vorrichtung zur Kontrolle des Volumens einer Halbkammer.

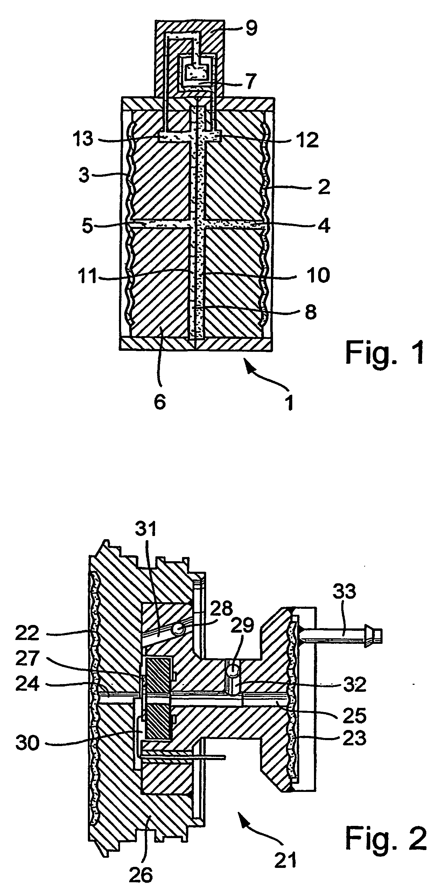

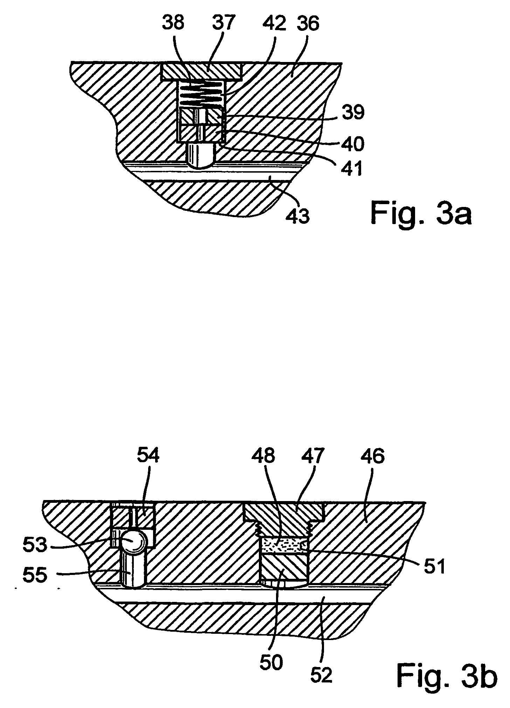

Der in Fig. 1 gezeigte Differenzdrucksensor umfaßt ein Meßwerk 1 mit einem zylindrischen Grundkörper 6, an dessen beiden Stirnseiten jeweils ein Membranbett ausgebildet ist. Über dem Membranbett auf der linken Seite der Figur erstreckt sich eine Trennmembran 3, welche mit ihrem Rand an der Stirnfläche des Grundkörpers 6 befestigt ist. Gleichermaßen ist über einem Membranbett an der gegenüberliegenden Stirnfläche des Grundkörpers 6 eine Trennmembran 2 befestigt. Von den Stirnflächen erstreckt sich jeweils ein Druckkanal 4, 5 axial einwärts in den Grundkörper, wobei die beiden Druckkanäle bei dieser Ausführungsform jeweils in einem Teilkammerabschnitt münden, der nahezu den gesamten Querschnitt des Grundkörpers 6 einnimmt. Zwischen den beiden Teilkammerabschnitten 10, 11 ist eine Überlastmembran 8 angeordnet, die erheblich steifer ist, als die beiden Trennmembranen 2, 3. Von den beiden Teilkammerabschnitten 10, 11 erstreckt sich jeweils ein Kanal 12, 13 zur Hochdruckseite bzw. zur Niederdruckseite einer Meßmembran 7, eines Elementarsensors, der in einem Elementarsensorgehäuse 9 angeordnet ist, welches an der Mantelfläche des Grundkörpers montiert ist. Somit trennt die Meßmembran die Halbkammern voneinander. Der Elementarsensor ist in dem Elementarsensorgehäuse 9 isostatisch gelagert, d.h., der Elementarsensor ist nicht nur im Bereich der Meßmembran, sondern auch im Bereich seiner Mantelfläche mit dem Druck der Übertragungsflüssigkeiten beaufschlagt. Hierbei wirkt der Druck der Hochdruckseite über den Kanal 12 auf die äußere Oberfläche der Meßmembran 7 und die äußeren Mantelflächen des Elementarsensors. Der Druck der Niederdruckseite wird über den Kanal 13 auf die Innenfläche der Meßmembran 7 und die inneren Mantelflächen des Elementarsensors geleitet. Es ist unmittelbar einsichtig, daß die isostatische Einspannung des beschriebenen Elementarsensors nicht ohne weiteres zu gleichem Volumina auf der Hochdruck-und der Niederdruckseite führt. Durch geeignete Anordnung der Kanäle, d.h. durch die Auswahl der Kanallänge und des Kanaldurchmessers, können jedoch wieder identische Volumina erzielt werden. Insbesondere bei einem Differenzdrucksensor sollten im Idealfall identische Trennmembranen auf der Hochdruck- und auf der Niederdruckseite verwendet werden. Gleichermaßen ist es wünschenswert, auf der Hochdruckseite und auf der Niederdruckseite die gleiche Übertragungsflüssigkeiten verwenden, da diese neben einem identischen Wärmeausdehnungskoeffizienten auch eine identische Viskosität aufweist. D.h., soweit möglich, ist die konstruktive Angleichung der Volumina in den Teilkammern die zu bevorzugende Lösung. Hierzu kann der in Fig. 1 gezeigte Differenzdrucksensor noch mit mindestens einem abstimmbaren Füllkörper ausgestattet sein, um die Angleichung der Volumina der ersten und der zweiten Teilkammer ggfs. zu optimieren. Einzelheiten zur Feinabstimmung der Volumina werden weiter unten anhand von Figuren 3a und 3b erörtert. Sollte die Angleichung der Volumina aufgrund konstruktiver Randbedingungen nicht möglich sein, so sind bei im wesentlichen gleicher Membransteifigkeit Übertragungsmedien mit unterschiedlichen Wärmeausdehnungskoeffizienten einzusetzen.

Fig. 2 zeigt einen erfindungsgemäßen Drucksensor, insbesondere einen Relativdrucksensor. Das Meßwerk 21 umfaßt einen Grundkörper 26 mit im wesentlichen axialsymmetrischer Struktur, wobei an einer ersten Stirnseite des Grundkörpers 26 ein Membranbett ausgebildet ist, über dem eine Trennmembran 22 mit ihrem Rand am Grundkörper 26 befestigt ist. Von dem Membranbett erstreckt sich ein Meßdruckkanal 24 in eine Elementarsensorkammer 30, in welcher der Elementarsensor 27 angeordnet ist. Im Grundkörper ist ebenfalls ein Befüllungskanal 31 ausgebildet, der mit der Druckkammer 30 kommuniziert und über ein Verschlußelement 28 druckdicht verschließbar ist. In der gezeigten Ausführungsform ist das Verschlußelement eine Stahlkugel, die eine definierte Tiefe in den Befüllungskanal 31 eingebracht wird, jedoch sind an dieser Stelle auch andere Verschlußformen einsetzbar, die weiter unten im Zusammenhang mit Figuren 3a und 3b beschrieben werden. Der Elementarsensor ist an seiner Basisfläche druckdicht in der Druckkammer 30 montiert und isostatisch eingespannt. Die erste Halbkammer dieses Meßwerks umfaßt somit das zwischen der Trennmembran 22 und dem Membranbett eingeschlossene Volumen, den Meßdruckkanal 24, das den Elementarsensor 27 umgebende Volumen der Sensorkammer 30 und den Befüllungskanal 31 bis zum Verschluß 28. Insofern als der vorliegende Relativdrucksensor temperaturkompensiert sein soll, wird der Atmosphärendruck nicht direkt auf die Rückseite der Meßmembran des Elementarsensors 27 geführt, sondern es erfolgt eine hydraulische Druckübertragung des Atmosphärendrucks, der über ein Rohr 33 auf eine atmosphärenseitige Trennmembran 23 wirkt, die über einem Membranbett an der zweiten Stirnseite des Grundkörpers 26 befestigt ist. Von dem Membranbett unter der atmosphärenseitigen Trennmembran 23 erstreckt sich ein Referenzdruckkanal 25 bis zur Rückseite der Membran des Elementarsensors 27. Von dem Referenzdruckkanal 25 erstreckt sich in radialer Richtung ein Füllkanal 29 zur Mantelfläche des Grundkörpers 26, wobei der Kanal mittels eines Verschlußelements 29 verschlossen ist, welches zur Kontrolle des Volumens in beliebiger Tiefe positionierbar ist. Anstelle der hier gezeigten Kugel 29 sind wiederum andere Verschlußelemente denkbar, die weiter unten im Zusammenhang mit Figuren 3a und 3b beschrieben werden.

Das zwischen der atmosphärenseitigen Trennmembran 23 und der Rückseite der Meßmembran des Elementarsensors 27 eingeschlossene Volumen definiert die zweite Halbkammer. Insofern, als bei dieser Ausgestaltung konstruktive Randbedingungen die vollständige Angleichung der Produkte von der Membransteifigkeit mit dem jeweiligen Volumen erschweren können, ist hier ggfs. eine Auswahl geeigneter Silikonöle mit unterschiedlichen Wärmeausdehnungskoeffizienten zu erwägen, um die Unterschiede zu kompensieren.

Geeignet sind beispielsweise Silikonöle der Reihe AK, welche von Wacker Chemie erhältlich sind. Die in der nachfolgenden Tabelle angegebenen Silikonöle (Dimethylpolysiloxane) weisen die gleiche Grundstruktur auf und unterscheiden sich lediglich in der Kettenlänge,

| **Bezeichnung** | **Viskosität** | **Ausdehnungskoeffizient** |
|---|---|---|
| AK 10 | 10 mm²/s | 10,0 cm³/(cm³°C)×10⁴ |
| AK 20 | 20 mm²/s | 9,7 cm³/(cm³°C)x10⁴ |
| AK 35 | 35 mm²/s | 9,5 cm³/(cm³°C)x10⁴ |
| AK 100 | 100 mm²/s | 9,4 cm³/(cm³°C)x10⁴ |
| AK 500 | 500mm²/s | 9,25 cm³/(cm^{3°}C)x10⁴ |

Im Idealfall sollte die Konstruktion so abgestimmt werden, daß das Verhältnis der Produkte aus Membransteifigkeit und zugehörigem Volumen dem Verhältnis der Ausdehnungskoeffizienten zweier Ölsorten entspricht. Hierbei ist zu beachten, daß die Zähigkeit der Silikonöle mit geringem Wärmeausdehnungskoeffizienten der Wahlfreiheit enge Grenzen setzt. Zur Feinabstimmung sind theoretisch Silikonöle mit unterschiedlichem Wärmeausdehnungskoeffizienten mischbar, um einen Zwischenwert von ihrem Wärmeausdehnungskoeffizienten zu erzielen. Fertigungstechnisch wird jedoch derzeit einer Feinabstimmung der Volumina mittels einstellbarer Füllkörper bzw. Verschlußelemente jedoch der Vorzug gegenüber einer Anpassung des Wärmeausdehnungskoeffizienten der Übertragungsflüssigkeit durch Mischung gegeben.

Anhand von Figuren 3a und 3b werden nun zwei Einrichtungen zur Feinabstimmung der Volumina der Halbkammem erläutert. Fig. 3a zeigt einen Detailschnitt durch den Grundkörper 36 eines Meßwerks im Bereich seiner Mantelfläche. Von der Mantelfläche erstreckt sich ein Füllkanal 42 radial einwärts und mündet in einen Kanal, 43 der Bestandteil einer der beiden Halbkammem ist. Der Füllkanal 42 weist kurz vor der Einmündung in den Kanal 43 einen verengten Querschnitt auf, wodurch eine axiale Anschlagfläche 41 ausgebildet ist, auf der Füllkörperelemente 39, 40 aufsetzen können. Die Füllkörperelemente 39, 40 weisen jeweils ein definiertes Volumen auf, welches beispielsweise bei konstanter Höhe und konstantem Außendurchmesser durch Variation des Durchmessers einer zentralen Bohrung durch den Füllkörper einstellbar ist. Durch Auswahl geeigneter Füllkörper können selbst kleinste Abweichungen zwischen den Produkten der genannten Größen ausgeglichen werden. Die Füllkörper werden durch eine Druckfeder 38, die zwischen den Füllkörpern und einem Schraubverschluß 37 axial eingespannt ist, in Position gehalten.

Selbstverständlich dient die Feder 38 zugleich als Füllkörper. Der Vorzug der soeben beschriebenen Anordnung besteht darin, daß die von den Füllkörpern verdrängte Übertragungsflüssigkeit aus der gleichen Öffnung entweichen kann, in welche die Füllkörper eingesetzt werden. Insofem ist bei dieser Lösung keine zusätzliche Gehäuseöffnung erforderlich, da eine Öffnung zum Befüllen der Teilkammern ohnehin erforderlich ist. Diese Lösung ist jedoch insofern aufwendig, als je nach der angestrebten Genauigkeit der Kompensation eine Vielzahl von unterschiedlichen Füllkörpern bereitzuhalten ist, oder eine Maßanfertigung eines Füllkörpers mit definiertem Volumen erfolgen muß.

Fig. 3b zeigt dagegen eine Variante einer Einrichtung zur Abstimmung des Volumens einer Teilkammer, die keine Bevorratung von unterschiedlichen Füllkörpern oder gar einer Maßanfertigung von Füllkörpern erfordert. Bei dieser Variante weist der Grundkörper 46 eine Bohrung 51 mit einem Feingewinde auf, welche in einen Kanal 52 mündet, welcher Teil einer Halbkammer ist. In das Feingewinde ist ein Kolben 51 eingeschraubt, wobei das Gewinde des Kolbens so gearbeitet ist, und so stramm mit dem Gewinde der Gewindebohrung 51 in Eingriff sitzt, daß praktisch keine Übertragungsflüssigkeit durch die Gewindegänge am Kolben vorbeifließen kann. Optional ist die Mantelfläche des Kolbens noch mit einer Dichtmasse beschichtet, die ggfs. thermisch aushärtbar ist. Von dem Kanal 52 erstreckt sich ein Füllkanal 55 zur Mantelfläche des Grundkörpers 46, wobei der Füllkanal 55 in einem ersten Abschnitt einen geringeren Durchmesser aufweist, als in einem zweiten Abschnitt, der an den ersten Abschnitt anschließt und sich bis zur Mantelfläche des Grundkörpers 46 erstreckt. Zwischen dem zweiten Abschnitt und dem ersten Abschnitt ist daher eine Stufe ausgebildet, welche eine Stahlkugel 53 axial abstützt, die einen geringeren Durchmesser aufweist als der zweite Abschnitt und einen größeren Durchmesser als der erste Abschnitt. Die Kugel wird mittels einer durchbohrten Schraube 54, die mit einem Gewinde in der Wand des zweiten Abschnitts in Eingriff steht, druckdicht gegen die axiale Anschlagfläche gepresst. Zur Feinabstimmung des Volumens wird zunächst die durchbohrte Schraube 54 gelockert, dann wird der Kolben 50 zur Korrektur des Volumens in die Bohrung 51 geschraubt, wobei die verdrängte Übertragungsflüssigkeit durch den Austrittskanal 55 an der Kugel 53 vorbei durch die durchbohrte Schraube 54 abfließen kann. Nach der Einstellung des gewünschten Volumens wird die Schraube 54 wieder fest angezogen. Zur Fixierung der Schraube 50 ist ggfs. ein Verguß 48 vorzusehen. Zudem kann die Bohrung 51 an der Mantelfläche des Grundkörpers 46 mit einer Abdeckschraube 47 verschlossen werden, um ein versehentliches Verstellen des Volumens zu vermeiden.

## Patentansprüche

1. Relativdrucksensor oder Differenzdrucksensor umfassend:
ein Meßwerk (1) mit einer ersten Halbkammer (4) mit einem ersten Volumen, die von einer ersten Trennmembran (2) mit einer ersten Membransteifigkeit verschlossen ist; und einer zweiten Halbkammer (5) mit einem zweiten Volumen, die von einer zweiten Trennmembran (3) mit einer zweiten Membranstefigkeit verschlossen ist, wobei die erste Halbkammer (4) von der zweiten Halbkammer (5) durch eine Meßmembran (7) getrennt ist, und die erste Halbkammer (4) mit einer ersten Übertragungsflüssigkeit mit einem ersten Wärmeausdehnungskoeffizienten und die zweite Halbkammer (5) mit einer zweiten Übertragungsflüssigkeit mit einem zweiten Wärmeausdehnungskoeffizienten gefüllt sind, **dadurch gekennzeichnet, daß** ein erstes Produkt aus der ersten Membransteifigkeit mit dem ersten Volumen und dem ersten Wärmeausdehnungskoeffizienten im wesentlichen gleich einem zweiten Produkt aus der zweiten Membransteifigkeit mit dem zweiten Volumen und dem zweiten Wärmeausdehnungskoeffizienten ist, wobei mindestens ein Faktor des ersten Produktes konstruktiv von dem entsprechenden Faktor des zweiten Produkts abweicht.

2. Drucksensor nach Anspruch 1, wobei die erste Membransteifigkeit von der zweiten Membransteifigkeit abweicht.

3. Drucksensor nach Anspruch 1 oder 2, wobei das erste Volumen von dem zweiten Volumen abweicht.

4. Drucksensor nach einem der Ansprüche 1 bis 3, wobei der erste Wärmeausdehnungskoeffizient vom zweiten Wärmeausdehnungskoeffizienten abweicht.

5. Drucksensor nach einem der Ansprüche 2 bis 3, wobei der erste Wärmeausdehnungskoeffizient gleich dem zweiten Wärmeausdehnungskoeffizienten ist.

6. Drucksensor nach einem der Ansprüche 1 bis 4, weiterhin umfassend mindestens eine Vorrichtung zur Feinabstimmung des Volumens in einer der Halbzellen.

7. Drucksensor nach Anspruch 5, wobei für beide Halbzellen jeweils eine Vorrichtung zur Feinabstimmung des Volumens der Halbzelle vorgesehen ist.

## Claims

1. A relative pressure sensor or differential pressure sensor comprising:
a measuring means (1) with a first half-chamber (4) which has a first volume and is closed by a first separating diaphragm (2) with a first diaphragm stiffness, and a second half-chamber (5) which has a second volume and is closed by a second separating diaphragm (3) with a second diaphragm stiffness, wherein the first half-chamber (4) is separated from the second half-chamber (5) by a measuring diaphragm (7), and the first half-chamber (4) is filled with a first transmission fluid with a first thermal expansion coefficient and the second half-chamber (5) is filled with a second transmission fluid with a second thermal expansion coefficient, **characterised in that** a first product of the first diaphragm stiffness, the first volume and the first thermal expansion coefficient is substantially equal to a second product of the second diaphragm stiffness, the second volume and the second thermal expansion coefficient, wherein at least one factor of the first product differs constructively from the corresponding factor of the second product.

2. A pressure sensor according to claim 1, wherein the first diaphragm stiffness differs from the second diaphragm stiffness.

3. A pressure sensor according to claim 1 or 2, wherein the first volume differs from the second volume.

4. A pressure sensor according to any one of claims 1 to 3, wherein the first thermal expansion coefficient differs from the second thermal expansion coefficient.

5. A pressure sensor according to any one of claims 2 to 3, wherein the first thermal expansion coefficient is equal to the second thermal expansion coefficient.

6. A pressure sensor according to any one of claims 1 to 4, additionally comprising at least one device for finely adjusting the volume in one of the half-cells.

7. A pressure sensor according to claim 5, wherein a device for finely adjusting the volume of the half-cell is provided for each of the two half-cells.

## Revendications

1. Capteur de pression relative ou capteur de pression différentielle comportant :
un dispositif de mesure (1) dotée d' une première demi-chambre (4)avec un premier volume qui est fermée par une première rigidité de membrane ; et une deuxième demi-chambre (5) avec un deuxième volume qui est fermée par une deuxième membrane de séparation (3) avec une deuxième rigidité de membrane ; la première demi-chambre (4) étant séparée de la deuxième demi-chambre (5) par une membrane de mesure, et la première demi-chambre (4) étant remplie avec un premier liquide de transmission doté d'un premier coefficient de dilatation thermique et la deuxième demi-chambre avec un deuxième liquide de transmission doté d'un deuxième coefficient de dilatation thermique, **caractérisé en ce qu'**un premier produit présentant une première rigidité de membrane avec le premier volume et un premier coefficient de dilatation thermique est essentiellement identique à un deuxième produit présentant une deuxième rigidité de membrane avec le deuxième volume et le deuxième coefficient de dilatation thermique, où au moins un facteur du premier produit est différent d'un point de vue constructif du facteur correspondant du deuxième produit.

2. Capteur de pression selon la revendication 1, où la première rigidité de membrane est différente de la deuxième rigidité de membrane.

3. Capteur de pression selon la revendication 1 ou 2, où le premier volume est différent du deuxième volume.

4. Capteur de pression selon une des revendications 1 à 3, où le premier coefficient de dilatation thermique est différent du deuxième coefficient de dilatation thermique.

5. Capteur de pression selon une des revendications 2 à 3, où le premier coefficient de dilatation thermique est égal au deuxième coefficient de dilatation thermique.

6. Capteur de pression selon une des revendications 1 à 4, comportant au moins un dispositif pour une adaptation précise du volume dans une des demi cellules.

7. Capteur de pression selon la revendication 5, où à chaque fois, on a prévu un dispositif destiné à adapter de façon précise le volume de la demi cellule pour les deux demi cellules.
